# FASCICULE DE BREVET EUROPEEN

(11) **EP 2 988 882 B1**
(45) Date de publication et mention de la délivrance du brevet: **16.06.2021**
(21) Numéro de dépôt: 14727591.1
(22) Date de dépôt: 23.04.2014
(51) Int. Cl.: B05D 5/08, B05D 7/14, C23C 18/12, C23C 18/04, B05D 3/02

(54) **PROCÉDÉ DE FABRICATION D'UNE PIÈCE DOTÉE D'UN REVÊTEMENT DE SURFACE LUBRIFIANT, PIÈCE DOTÉE D'UN TEL REVÊTEMENT ET TURBOMACHINE**
VERFAHREN ZUR HERSTELLUNG EINES TEILS MIT EINER SCHMIERFETT-OBERFLÄCHENBESCHICHTUNG, TEIL MIT SOLCH EINER BESCHICHTUNG UND STRÖMUNGSMASCHINE
PROCESS FOR MANUFACTURING A PART PROVIDED WITH A LUBRICATING SURFACE COATING, PART PROVIDED WITH SUCH A COATING AND TURBOMACHINE

(30) Priorité: 26.04.2013 FR 1353885
(43) Date de publication de la demande: 02.03.2016
(73) Titulaire: Liebherr-Aerospace Toulouse SAS, 31200 Toulouse (FR); Centre National de la Recherche Scientifique (C.N.R.S.), 75794 Paris Cedex 16 (FR); Université Paul Sabatier Toulouse III, 31400 Toulouse (FR)
(72) Inventeur: RAHOUI, Souphiane, 31200 Toulouse (FR); BONINO, Jean-Pierre, 31320 Pechabou (FR); TURQ-PERRUSSEL, Viviane, 31400 Toulouse (FR); ROCCHI, Jérôme, 31380 Roqueseriere (FR)
(74) Mandataire: BARRE LAFORGUE
(86) Numéro de dépôt international: PCT/FR2014/050986
(87) Numéro de publication internationale: WO 2014/174215

(56) Documents cités:
- EP-A1- 1 752 227
- WO-A1-2009/141830

## Description

L'invention concerne un procédé de fabrication d'une pièce dotée d'un revêtement de surface lubrifiant. L'invention concerne également une pièce, telle qu'une feuille de palier de turbomachine, dotée d'un revêtement de surface lubrifiant susceptible d'être obtenue par un tel procédé.

L'invention concerne en outre une turbomachine comprenant une telle pièce ainsi qu'un système de conditionnement d'air de cabine d'aéronef comprenant une telle turbomachine.

Les pièces telles que les feuilles d'un palier à feuilles ou d'une butée axiale de palier permettent la rotation d'une pièce par rapport à une autre sur un film de fluide, en particulier un gaz tel que l'air. Elles sont par exemple utilisées dans les turbines et compresseurs de systèmes de conditionnement d'air d'aéronefs, ou encore dans les turbocompresseurs pour piles à combustibles, et subissent d'importantes forces de frottement dynamique, en particulier lors des phases d'arrêt et de démarrage.

Pour réduire l'usure de telles pièces, il est connu d'utiliser un revêtement à base de composés fluorocarbonés tels que le polytétrafluoroéthylène (PTFE). Cependant, un tel revêtement présente de nombreux inconvénients de mise en œuvre liés à sa toxicité pour l'homme et l'environnement. En outre, un tel revêtement présente une température d'utilisation maximale limitée (200°C à 250°C).

US 2012/0141290 décrit un procédé d'application d'un revêtement lubrifiant sur un substrat impliquant l'utilisation de particules lubrifiantes elles-mêmes revêtues d'un film protecteur. Le liant du revêtement incorporant les particules lubrifiantes est formé d'un mélange eutectique par exemple à base de sulfure de cuivre et d'argent. Un tel procédé présente de nombreuses contraintes de mise en œuvre et d'étapes successives et ne permet pas d'obtenir des propriétés lubrifiantes et de résistance à l'usure satisfaisantes.

L'invention vise donc à proposer un procédé de fabrication d'une pièce dotée d'un revêtement de surface lubrifiant et une pièce dotée d'un tel revêtement de surface lubrifiant qui permettent de pallier ces inconvénients.

L'invention vise donc à proposer un procédé de fabrication d'une pièce dotée d'un revêtement de surface lubrifiant dont la mise en œuvre est simple et rapide.

En particulier, l'invention vise à proposer un procédé de fabrication d'une pièce dotée d'un revêtement de surface lubrifiant qui soit compatible avec les contraintes de sécurité et de respect de l'environnement, et en particulier qui ne soit pas susceptible de mettre en danger la santé des opérateurs le mettant en œuvre.

L'invention vise également à proposer un procédé qui soit facile à mettre en œuvre et qui ne nécessite que peu de manipulations.

L'invention vise également à proposer un procédé permettant de fabriquer une pièce dotée d'un revêtement de surface lubrifiant dont les propriétés restent stables dans le temps sur une longue durée, en particulier sur une durée suffisamment longue et qui peut être certifiée pour permettre l'emploi d'une telle pièce à bord d'un aéronef, d'un système spatial ou d'un véhicule terrestre ou aquatique. L'invention vise en particulier à proposer un procédé de fabrication sans ajout de charges solides lubrifiantes susceptibles de se libérer à terme du revêtement.

L'invention vise à proposer un procédé permettant de fabriquer une pièce dotée d'un revêtement de surface lubrifiant à partir d'un faible nombre de produits de départ.

L'invention vise également à proposer une pièce dotée d'un revêtement de surface lubrifiant apte à être intégrée dans une turbomachine, notamment présentant d'excellentes propriétés de lubrification et de résistance à l'usure à haute vitesse -en particulier à plus de 100 m/s et jusqu'à plus de 2000 m/s (par exemple 20 000 tours/minutes et jusqu'à plus de 60 000 tours/minutes pour un palier de turbomachine de système de conditionnement d'air d'aéronef) - et à haute température -en particulier à plus de 200°C et jusqu'à plus de 500°C-.

Pour ce faire, l'invention concerne un procédé de fabrication d'une pièce dotée d'un revêtement de surface lubrifiant, conforme à la revendication 1.

Avantageusement et selon l'invention, au moins un 5 groupement organique d'au moins un précurseur dudit revêtement est choisi parmi les groupements hydrocarbonés. En outre, avantageusement et selon l'invention, le traitement thermique est réalisé à une température inférieure à la température de décomposition totale des formes allotropiques lubrifiantes du carbone solide, notamment de façon à former au sein dudit réseau solide au moins un composé solide lubrifiant du carbone choisi dans le groupe formé du graphène, du graphite, du carbone amorphe et de leurs mélanges.

Dans tout le texte, on entend par « graphène » une forme allotropique du carbone formée d'atomes de carbones liés les uns aux autres par des liaisons C-C de type sp2 et présentant au moins un feuillet formé d'une monocouche d'atomes de carbone liés les uns aux autres selon un réseau hexagonal plan. Le graphène peut éventuellement se présenter sous une forme partiellement oxydée.

Dans tout le texte, on entend par « graphite » une forme allotropique du carbone constituée d'un empilement d'au moins 50 feuillets de graphène.

Dans tout le texte, on entend par « carbone amorphe » toute forme allotropique du carbone comprenant à la fois des liaisons C-C de type sp³ et des liaisons C-C de type sp².

Les inventeurs ont constaté de façon tout à fait surprenante qu'un traitement thermique à une température supérieure à 220°C d'un revêtement de surface préparé à partir d'une composition comprenant au moins un précurseur présentant au moins un groupement organique permet d'obtenir un revêtement de surface lubrifiant formé d'un réseau solide au moins partiellement inorganique incorporant, dispersé et piégé au sein de ce réseau solide, du carbone solide sous au moins une forme allotropique lubrifiante, à savoir notamment du graphène et/ou du graphite et/ou du carbone amorphe.

En particulier, les inventeurs ont constaté que les propriétés de lubrification et de résistance à l'usure à haute vitesse dudit revêtement sont telles qu'il est possible d'utiliser une pièce fabriquée par un procédé selon l'invention à plus de 60 000 tours/minutes et jusqu'à 120 000 tours/minutes pour un palier de turbomachine de système de conditionnement d'air d'aéronef.

On obtient donc un revêtement de surface lubrifiant inorganique incorporant du carbone solide sous une forme allotropique lubrifiante dispersé et piégé au sein de son réseau sans avoir à manipuler et à ajouter du graphène, du graphite et/ou du carbone amorphe, notamment sous forme pulvérulente, à la composition comprenant le précurseur dudit revêtement. Une explication possible de ce phénomène est qu'au cours du traitement thermique on réalise une transformation in situ, au sein même du revêtement de surface en formation, des groupements organiques portés par ledit précurseur en au moins un composé solide lubrifiant du carbone appartenant au groupe formé du graphène, du graphite, du carbone amorphe et de leurs mélanges.

Ainsi, avantageusement et selon l'invention, ladite composition comprenant au moins un précurseur dudit revêtement peut elle-même être exempte d'agent lubrifiant, en particulier d'agent lubrifiant solide, et notamment exempte de graphène, de graphite, de carbone amorphe ou encore de sulfure de molybdène ou de particules de composé (s) fluorocarboné(s). Elle est donc exempte de toute particule solide lubrifiante rajoutée au réseau solide formé par activation thermique du chaque précurseur du revêtement. Elle est également exempte de toute molécule qui pourrait être greffée au graphène et/ou au graphite et/ou au carbone amorphe en vue d'augmenter leur compatibilité avec le(s) précurseur(s).

En particulier, un procédé selon l'invention permet d'obtenir un revêtement dans lequel le carbone solide sous au moins une forme allotropique lubrifiante est présent sous forme de particules dispersées de façon homogène. Plus particulièrement, les particules de graphène et/ou de graphite et/ou de carbone amorphe se trouvent à l'état exfolié (particules et/ou feuillets individuel(le)s) et non agglomérées dans ledit revêtement.

Avantageusement et selon l'invention, on réalise le traitement thermique du revêtement à une température supérieure à 220°C et à une température inférieure à la température de décomposition par oxydation totale de chaque groupement organique du précurseur en produits gazeux (CO₂, ...). En particulier, avantageusement et selon l'invention, on réalise ledit traitement thermique dudit revêtement dans des conditions adaptées pour empêcher, ou au moins limiter, la décomposition de chaque groupement organique, notamment en dioxyde de carbone.

Un groupement organique du précurseur peut être tout groupement organique comprenant au moins un atome de carbone de façon à fournir une source de carbone pour permettre d'obtenir, dispersé et piégé au sein dudit réseau solide, au moins un composé solide lubrifiant du carbone, notamment du graphène et/ou du graphite et/ou du carbone amorphe. Avantageusement et selon l'invention, au moins un groupement organique d'un précurseur dudit revêtement est choisi parmi les groupements hydrocarbonés. Avantageusement et selon l'invention, au moins un groupement organique d'un précurseur dudit revêtement est choisi parmi les alkyles linéaires, les alkyles ramifiés et/ou les alkyles cycliques. De tels groupements hydrocarbonés peuvent être des groupements alkyles, des groupements aryles, des groupements vinyliques, et peuvent présenter au moins un groupement fonctionnel choisi parmi un ester, une fonction époxyde, un aldéhyde, une cétone, une amine, un amide, un acide carboxylique ou un groupe comprenant un halogène, et leurs éventuels sels conjugués.

Avantageusement et selon l'invention, au moins un groupement organique d'un précurseur dudit revêtement est choisi parmi les groupements organiques comprenant 1 à 25 atomes de carbone, et notamment parmi les groupements organiques comprenant 3 à 15 atomes de carbone.

Avantageusement et selon l'invention, le précurseur dudit revêtement présente au moins un groupement organique non hydrolysable dans ladite composition. En outre, avantageusement et selon l'invention, ledit groupement organique non hydrolysable dans ladite composition est choisi parmi les groupements hydrocarbonés liés audit précurseur par un atome de carbone.

Avantageusement et selon l'invention, au moins un précurseur dudit revêtement est choisi dans le groupe formé des alcoxydes présentant au moins un groupement hydrolysable dans ladite composition de précurseur(s) et au moins un groupement organique non hydrolysable dans ladite composition de précurseur(s). Un tel alcoxyde est apte à former une matrice hybride (organique-inorganique) par hydrolyse/condensation formée d'enchainements atomiques inorganiques (par exemple du type : -Si-O-Si-) et d'enchainements hydrocarbonés organiques.

Ainsi, avantageusement et selon l'invention, au moins un précurseur dudit revêtement est choisi dans le groupe formé des alcoxydes de formule générale (I) suivante :

X(O-R₁)_{n'-a} (R₂)ₐ (I)

dans laquelle :
▪ X est choisi parmi le silicium (Si) et les éléments métalliques,
▪ R₁ est choisi parmi les groupements hydrocarbonés,
▪ n' est un nombre entier naturel représentant la valence de l'élément X,
▪ a est un nombre entier naturel de l'intervalle [1 ; n' [
▪ R₂ est choisi parmi les groupements organiques liés à X par un atome de carbone.

X peut être choisi parmi les éléments chimiques des blocs d et p de la classification périodique des éléments (tableau de Mendeleïev), tel que le silicium (Si), l'aluminium (Al), le titane (Ti), le zirconium (Zr) et le vanadium (V) ou encore le tungstène (W), le tantale (Ta), le niobium (Nb) et le fer (Fe).

En particulier, avantageusement et selon l'invention, ledit alcoxyde présente au moins un groupement non hydrolysable. Ainsi, avantageusement et selon l'invention, ledit groupement organique R₂ est choisi parmi les groupements liés à X par un atome de carbone et comprenant 1 à 12 atomes de carbone.

La composition de précurseur(s) peut ainsi comprendre un ou plusieurs alcoxysilane(s) et/ou un ou plusieurs alcoxyde(s) métallique(s). Avantageusement et selon l'invention, ladite composition comprend au moins un alcoxysilane. Dans une variante particulièrement avantageuse d'un procédé selon l'invention, ladite composition comprend au moins un alcoxysilane et au moins un alcoxyde métallique.

En particulier, avantageusement et selon l'invention, ladite composition comprend au moins un précurseur choisi dans le groupe formé des alcoxysilanes de formule générale (II) suivante :

Si(O-R₁)₄₋ₐ (R₂)ₐ (II)

dans laquelle :
▪ R₁ est choisi parmi les groupements hydrocarbonés,
▪ a est un nombre entier naturel de l'intervalle [1 ; 3],
▪ R₂ est choisi parmi les groupements organiques liés au silicium par un atome de carbone.

Avantageusement et selon l'invention, au moins un précurseur est choisi dans le groupe formé des alcoxysilanes de formule générale (II) suivante :

Si(O-R₁)₄₋ₐ (R₂)ₐ (II)

dans laquelle :
▪ R₁ est choisi parmi les groupements hydrocarbonés,
▪ a est un nombre entier naturel de l'intervalle [1 ; 3],
▪ R₂ est choisi parmi les groupements organiques liés au silicium par un atome de carbone.

Avantageusement, le groupement R₂ de chaque alcoxysilane est choisi dans le groupe formé du 3,4-époxycyclohexyléthyle et du glycidoxypropyle.

Avantageusement, chaque alcoxysilane est choisi dans le groupe formé du glycidoxypropyltriméthoxysilane (GPTMS), du glycidoxypropylméthyldiméthoxysilane (MDMS), du glycidoxypropylméthyldiéthoxysilane (MDES) du glycidoxypropyltriéthoxysilane (GPTES), du méthyltriéthoxysilane (MTES), du diméthyldiéthoxysilane (DMDES), du méthacryloxypropyltriméthoxysilane (MAP), du 3-(triméthoxysilyl)propylamine (APTMS), du 2-(3,4-époxycyclohexyl)éthyl-triéthoxysilane (ECHETES), du 2-(3,4-époxycyclohexyl)éthyl-triméthoxysilane (ECHETMS) et du 5,6-époxyhexyltriéthoxysilane (EHTES).

La composition comprenant au moins un précurseur dudit revêtement peut donc comprendre uniquement un (ou des) alcoxyde(s) de silicium (alcoxysilane). La composition comprenant au moins un précurseur dudit revêtement peut également comprendre au moins un alcoxyde métallique (seul ou en combinaison avec au moins un alcoxysilane).

Avantageusement et selon l'invention, ladite composition comprend au moins un précurseur dudit revêtement choisi dans le groupe formé des alcoxydes métalliques de formule générale (III) suivante:

M(O-R₃)ₘ (III)

dans laquelle :
▪ M est un élément métallique choisi parmi l'aluminium, le titane, le zirconium et le vanadium,
▪ R₃ est un groupement hydrocarboné de formule [CₙH₂ₙ₊₁], n étant un nombre entier supérieur ou égal à 1,
▪ m est un nombre entier naturel représentant la valence de l'élément métallique M.

Avantageusement et selon l'invention, le groupement R₃ hydrocarboné de formule [CₙH₂ₙ₊₁] est notamment choisi dans le groupe formé d'un méthyle, d'un éthyle, d'un propyle, d'un butyle, en particulier d'un butyle normal secondaire de formule [CH₃-CH₂-(CH₃)CH-]-.

Avantageusement et selon l'invention, chaque alcoxyde métallique est choisi dans le groupe formé des alcoxydes d'aluminium -notamment du tri(*sec*-butoxyde) d'aluminium, du tri(n-butoxyde) d'aluminium, du tri(éthoxyde) d'aluminium, du tri(éthoxyéthoxyéthoxyde) d'aluminium et du tri(isopropoxyde) d'aluminium-, des alcoxydes de titane -notamment du tétra(n-butoxyde) de titane, du tétra(isobutoxyde) de titane, du tétra(isopropoxyde) de titane, du tétra(méthoxyde) de titane et du tétra(éthoxyde) de titane-, des alcoxydes de vanadium, -notamment du tri(isobutoxyde)oxyde de vanadium et du tri(isopropoxyde)oxyde de vanadium et des alcoxydes de zirconium -notamment du tétra(éthoxyde) de zirconium, du tétra(isopropoxyde) de zirconium, du tétra(n-propoxyde) de zirconium, du tétra(n-butoxyde) de zirconium et du tétra(t-butoxyde) de zirconium.

Avantageusement et selon l'invention, l' alcoxyde d'aluminium unique est choisi dans le groupe formé du tri(*s*-butoxyde) d'aluminium, du tri(n-butoxyde) d'aluminium, du tri(éthoxyde) d'aluminium, du tri(éthoxyéthoxyéthoxyde) d'aluminium et du tri(*iso*propoxyde) d'aluminium.

Avantageusement et selon l'invention, le rapport molaire des alcoxysilanes par rapport aux alcoxydes métalliques dans la composition est compris entre 99/1 et 50/50. Avantageusement et selon l'invention, le rapport molaire de l'ensemble des alcoxysilanes par rapport à l'ensemble des alcoxydes métalliques dans la composition est compris entre 99/1 et 50/50.

Avantageusement et selon l'invention, le rapport molaire des alcoxysilanes et des alcoxydes métalliques -notamment de l'alcoxyde d'aluminium-dans la composition est compris entre 85/15 et 6/4 notamment compris entre 8/2 et 64/36. Avantageusement et selon l'invention, le rapport molaire de l'ensemble des alcoxysilanes par rapport à l'ensemble des alcoxydes métalliques dans la composition est compris entre 85/15 et 64/36.

Par ailleurs, la composition comprenant au moins un précurseur dudit revêtement comprend au moins un solvant liquide, en particulier un solvant hydro-alcoolique formé d'eau et d'au moins un alcool. On utilise en particulier avantageusement un alcool choisi parmi l'éthanol, le propanol-1 et le propanol-2.

Ainsi, dans une première étape d'un procédé selon l'invention, on prépare une composition liquide comprenant au moins un précurseur dudit revêtement, en particulier au moins un alcoxysilane et/ou au moins un alcoxyde métallique, et au moins un solvant liquide.

Puis, dans une deuxième étape d'un procédé selon l'invention, on dépose ladite composition liquide sur ladite pièce par toute technique de dépôt permettant de déposer une quantité de composition liquide adaptée pour la formation dudit revêtement de surface. Un procédé selon l'invention est ainsi un procédé de type sol-gel permettant de réaliser un revêtement pouvant être qualifié d' « hybride ».

Avantageusement et selon l'invention, on dépose ladite composition liquide sur au moins une partie d'une surface de ladite pièce par une technique de dépôt choisie parmi le trempage-retrait, la pulvérisation, la centrifugation (également appelée « spin-coating ») et la sérigraphie. Dans une variante particulièrement avantageuse d'un procédé selon l'invention, on dépose ladite composition liquide par trempage-retrait ou par pulvérisation. En outre, par exemple pour effectuer une retouche sur une pièce, la composition liquide peut également être déposée à l'aide d'un pinceau ou d'un tampon. Bien sûr, une ou plusieurs couche(s) de ladite composition peut(peuvent) être déposée(s) sur chaque pièce à fabriquer.

Après avoir déposé ladite composition en surface de la pièce, on réalise ledit traitement thermique selon l'invention entrainant la solidification de la composition et la formation dudit revêtement à l'état solide.

Ledit traitement thermique est réalisé dans des conditions de température prédéterminées, pendant une durée prédéterminée et dans une atmosphère adaptée pour permettre la formation d'un revêtement de surface lubrifiant formé d'un réseau solide au moins partiellement inorganique au sein duquel est dispersé et emprisonné, à l'état natif, du carbone solide lubrifiant, notamment du graphène et/ou du graphite et/ou du carbone amorphe.

On choisit notamment la durée et la température dudit traitement thermique en fonction de la nature de chaque précurseur et du revêtement, de la nature de la (ou des) forme(s) allotropiques lubrifiante(s) du carbone souhaitée(s) et de l'atmosphère au sein de laquelle est réalisé le traitement thermique. En particulier, avantageusement et selon l'invention, on réalise ledit traitement thermique pendant une durée comprise entre 10 minutes et 72 heures, en particulier entre 30 minutes et 16 heures.

En outre, avantageusement et selon l'invention, on peut réaliser ledit traitement thermique sous atmosphère neutre, réductrice ou oxydante, par exemple dans l'air. Avantageusement et selon l'invention, on réalise ledit traitement thermique dans une atmosphère gazeuse comprenant au moins un gaz choisi parmi l'oxygène, le diazote, le dioxyde de carbone, et leurs mélanges.

Dans une première variante de réalisation d'un procédé selon l'invention, on réalise ledit traitement thermique dans une atmosphère oxydante, par exemple dans de l'air, à une température comprise entre 220°C et 450°C, en particulier entre 250°C et 400°C. Dans une deuxième variante de réalisation d'un procédé selon l'invention, on réalise ledit traitement thermique dans une atmosphère non oxydante, à une température comprise entre 300°C et 800°C, en particulier entre 350°C et 550°C. L'atmosphère gazeuse dans laquelle on réalise ledit traitement thermique peut également comprendre un mélange d'au moins un gaz neutre avec au moins un gaz oxydant, dans toutes les proportions possibles.

La durée et la température du traitement thermique d'un procédé selon l'invention est en particulier réduite par rapport à la durée et à la température de traitement thermique généralement nécessaires dans le cas de la fabrication d'une pièce présentant un revêtement à base de polytétrafluoroéthylène.

Par ailleurs, avantageusement et selon l'invention, on réalise ledit traitement thermique de façon à former des fissures dans ledit revêtement.

Les inventeurs ont observé de manière tout à fait surprenante qu'un tel revêtement présente des fissures permettant de diminuer les contraintes de compression éventuellement présentes au sein du revêtement. Les inventeurs ont également observé que la présence de ces fissures permet, le cas échéant, de faciliter la mise en forme subséquente de la pièce préparée. Ceci est particulièrement avantageux dans le cas de la préparation de feuilles de palier à feuilles qui doivent être cintrées. En outre, la fissuration qui peut avoir lieu au cours du traitement thermique d'un procédé selon l'invention se produit sans écaillage (ce qui serait préjudiciable pour la pièce fabriquée).

Ainsi, avantageusement et selon l'invention, après ledit traitement thermique, on déforme ladite pièce en flexion. En effet, dans la variante de réalisation dans laquelle le revêtement fabriqué par un procédé selon l'invention présente des fissures, ladite pièce (avec son revêtement lubrifiant) peut être mise en forme (pliée, cintrée, courbée, notamment par roulage) sans entrainer de détérioration du revêtement, ni de son accroche à la surface de la pièce, et permettant de conserver ses propriétés lubrifiantes.

L'invention s'étend à une pièce susceptible d'être obtenue par un procédé selon l'invention. L'invention concerne donc une pièce conforme à la revendication 8. Elle concerne donc une pièce dotée d'un revêtement de surface lubrifiant caractérisée en ce que ledit revêtement est formé d'un réseau solide au moins partiellement inorganique incorporant du carbone solide sous au moins une forme allotropique lubrifiante -notamment au moins un composé solide lubrifiant du carbone choisi dans le groupe formé du graphène, du graphite, du carbone amorphe et de leurs mélanges- à l'état dispersé et piégé au sein dudit réseau solide.

L'invention s'étend en particulier à une pièce dotée d'un revêtement de surface lubrifiant caractérisée en ce que ledit revêtement est formé d'un réseau solide au moins partiellement inorganique incorporant du graphène à l'état dispersé et piégé au sein dudit réseau solide. De telles particules de graphène permettent d'obtenir un revêtement présentant d'excellentes propriétés lubrifiantes sans modifier de façon importante la microstructure dudit réseau solide.

Ainsi, ledit revêtement comprend des particules de carbone solide (notamment de graphène et/ou de graphite et/ou de carbone amorphe) qui ne sont pas issues d'un ajout de particules de carbone solide (sous forme pulvérulente ou dans une suspension liquide). Avantageusement et selon l'invention, lesdites particules de carbone solide sont dispersées dans ledit revêtement et se présentent sous forme individualisées (c'est-à-dire non agglomérées entre elles) dans ledit revêtement. En outre, avantageusement et selon l'invention, ledit revêtement comprend des particules de carbone solide présentant au moins une dimension inférieure à 400 nm, et notamment inférieure à 100 nm. En particulier, lesdites particules de carbone solide présentent une taille moyenne comprise entre 10 nm et 500 nm au sein dudit revêtement.

Avantageusement et selon l'invention, ledit revêtement comprend des particules de graphène présentant une taille moyenne comprise entre 10 nm et 50 nm.

En outre, avantageusement et selon l'invention, ledit revêtement comprend 2 % à 45 %, notamment 5 % à 40 % en poids de particules de carbone solide -notamment de graphène et/ou de graphite et/ou de carbone amorphe- par rapport au poids total dudit revêtement. En particulier, la proportion massique de carbone solide -notamment de graphène et/ou de graphite et/ou de carbone amorphe- dans ledit revêtement est comprise entre 20 % et 30 %, par exemple 25 %. Cette proportion peut être mesurée par microanalyse élémentaire par exemple par analyse du carbone organique total (COT). La proportion massique de carbone solide dans le revêtement peut varier en fonction des conditions dans lesquelles on réalise le traitement thermique mais également en fonction de la nature des précurseurs et du groupement R₂ en particulier.

En particulier, avantageusement et selon l'invention, ledit revêtement obtenu après ledit traitement thermique, est exempt de groupements organiques et notamment de matériau polymérique, et est uniquement constitué d'un réseau solide céramique (en particulier formé de silice et/ou d'alumine) incorporant du graphène et éventuellement du graphite ou du carbone amorphe.

L'invention s'étend en particulier à une pièce dotée d'un revêtement de surface lubrifiant comprenant :
- un réseau solide formé à partir de :
   - au moins un précurseur choisi dans le groupe formé des alcoxysilanes de formule générale (II) suivante :

      Si(O-R₁)₄₋ₐ (R₂)ₐ (II)

      dans laquelle :
      ▪ R₁ est choisi parmi les groupements hydrocarbonés,
      ▪ a est un nombre entier naturel de l'intervalle [1 ; 3],
      ▪ R₂ est choisi parmi les groupements hydrocarbonés non hydrolysables dans ladite composition,
   - au moins un précurseur choisi dans le groupe formé des alcoxydes métalliques de formule générale (III) suivante:

      M(O-R₃)ₘ (III)

      dans laquelle :
      ▪ M est un élément métallique choisi parmi l'aluminium, le titane, le zirconium et le vanadium,
      ▪ R₃ est un groupement hydrocarboné de formule [CₙH₂ₙ₊₁], n étant un nombre entier supérieur ou égal à 1,
      ▪ m est un nombre entier naturel représentant la valence de l'élément métallique M,
- au moins un composé solide carboné lubrifiant dispersé dans ladite matrice, ledit composé solide carboné lubrifiant étant choisi dans le groupe formé du graphène, du graphite et du carbone amorphe.

Ladite pièce peut être toute pièce destinée à subir des frottements importants. Ladite pièce peut notamment être une feuille d'un palier à feuilles, comportant un rotor, mobile en rotation autour d'un axe, et un stator (partie fixe), le stator comprenant une première structure, dite support adaptée pour supporter en regard du rotor une seconde structure, dite sustentateur, ledit sustentateur comportant une pluralité de feuilles régulièrement réparties, s'étendant sur un secteur circulaire et fixées par un bord, dit bord de fixation, sur une surface du sustentateur en regard du rotor. Ainsi, avantageusement et selon l'invention, ladite pièce est une pièce choisie parmi une feuille de palier à feuilles de turbomachine et une feuille de butée axiale de palier de turbomachine. L'invention s'étend donc également à un palier à feuilles comprenant au moins une feuille selon l'invention et/ou obtenue par un procédé selon l'invention.

Un palier comprenant une pièce selon l'invention peut être un palier radial, comprenant un rotor formé par un arbre tournant et un stator comprenant un support et un sustentateur en forme de bagues concentriques. Un tel palier permet de guider en rotation l'arbre tournant en induisant des frottements réduits. Il peut comprendre une ou plusieurs feuille(s). Les feuilles sont par exemple de forme rectangulaire, leur bord de fixation fixé sur une face interne du sustentateur selon une génératrice de celui-ci, et chaque feuille s'étendant, selon le sens de rotation du rotor, jusqu'à son bord libre.

Un palier comprenant une pièce selon l'invention peut également être un palier de butée, le rotor étant formé par une plaque cylindrique tournante, fixée coaxialement à un arbre autour ou en bout de celui-ci, le stator comprenant un support et un sustentateur en forme de plaques cylindriques fixes, coaxiales entre elles et avec le rotor, placées en regard de celui-ci. Un tel palier permet d'encaisser les efforts axiaux produits par le compresseur porté par le rotor. Les feuilles sont par exemple de forme sensiblement trapézoïdales, leur bord de fixation étant fixé sur une face du sustentateur en regard du rotor selon un rayon du sustentateur, chaque feuille s'étendant, selon le sens de rotation du rotor, jusqu'à son bord libre. Les feuilles sont de préférence conformées de manière à couvrir chacune un secteur circulaire du disque de sustentation et sont disposées à intervalles réguliers de façon à recouvrir le disque sans recouvrement ou avec un recouvrement minimum des secteurs entre eux.

Avantageusement et selon l'invention, ledit revêtement présente une épaisseur comprise entre 0,2 µm et 5 µm, en particulier entre 1 µm et 2 µm. L'épaisseur dudit revêtement est mesurée par des méthodes connues de l'homme du métier, notamment la mesure par profilométrie interférométrique ou par mesure de courants de Foucault induits. En particulier, il est possible de réaliser une analyse topographique des zones de bordure du revêtement à l'aide d'un profilomètre 3D.

Avantageusement et selon l'invention, ledit réseau solide au moins partiellement inorganique est choisi dans le groupe formé des réseaux d'oxydes métalliques, des réseaux d'oxydes de silicium et de leurs mélanges. Selon la nature du (ou des) précurseur(s) utilisé(s), le revêtement lubrifiant comprend par exemple un dioxyde de silicium (SiO₂) ou encore un oxyde d'aluminium (Al₂O₃).

Une pièce selon l'invention peut être formée de tout matériau comprenant au moins un métal. En particulier, avantageusement et selon l'invention, ladite pièce est formée d'au moins un matériau métallique. Une pièce selon l'invention est par exemple formée d'un matériau comprenant au moins un élément choisi parmi l'aluminium, le nickel, le palladium, le titane, le zirconium, le vanadium, le niobium, le tantale, le fer, l'argent, l'or, le cuivre, le carbone et leurs alliages. Une pièce selon l'invention est avantageusement formée en alliage métallique, notamment un alliage métallique à base de nickel, en particulier un superalliage tel que l'Inconel®.

L'invention s'étend également à une turbomachine comprenant au moins une pièce selon l'invention et/ou obtenue par un procédé selon l'invention. Une telle turbomachine peut être réceptrice et/ou motrice et/ou génératrice ; elle peut être axiale et/ou centrifuge ; et il s'agit en particulier d'un compresseur, d'une turbine ou d'un turbocompresseur. En particulier, avantageusement et selon l'invention, une telle turbomachine est choisie parmi les compresseurs pour piles à combustibles.

L'invention s'étend également à un système de conditionnement d'air de cabine d'aéronef comprenant au moins une turbomachine selon l'invention. Elle s'étend également à un aéronef comprenant un tel système de conditionnement d'air.

L'invention s'étend également à un système de pile à combustible comprenant au moins une turbomachine selon l'invention.

L'invention concerne aussi un procédé de fabrication d'une pièce, une pièce, une turbomachine, un système de conditionnement d'air de cabine d'aéronef et un système de pile à combustible caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentiels donnée à titre d'exemple non limitatif, et qui se réfère aux figures annexées dans lesquelles :
- la figure 1 représente une coupe transversale d'un palier à feuilles comprenant plusieurs pièces selon l'invention,
- la figure 2 est un schéma en vue de côté d'une butée axiale de palier comprenant plusieurs pièces selon l'invention,
- la figure 3 représente les courbes d'analyse thermo-gravimétrique (ATG) et d'analyse thermique différentielle (ATD) d'un revêtement d'une pièce selon l'invention,
- la figure 4 représente des diagrammes de diffraction des rayons X d'un revêtement de pièces selon l'invention,
- la figure 5 représente des spectres en Résonance Magnétique Nucléaire (RMN) du carbone d'un revêtement de pièces selon l'invention,
- la figure 6 représente des spectres en RMN du silicium d'un revêtement de pièces selon l'invention,
- la figure 7 représente des spectres Infrarouge en Raman d'un revêtement de pièces selon l'invention,
- la figure 8 représente une image obtenue par microscopie électronique en transmission (MET) du revêtement d'une pièce selon l'invention,
- la figure 9 représente une image obtenue par microscopie électronique en transmission (MET) du revêtement d'une pièce selon l'invention.

On choisit une pièce en alliage métallique à revêtir d'un revêtement lubrifiant telle qu'une plaque destinée à former une feuille de palier, ou une feuille de butée axiale d'un palier.

### Préparation de surface de la pièce métallique :

La préparation de surface de l'alliage métallique vise à lui donner des caractéristiques physicochimiques maîtrisées et reproductibles quelle que soit sa composition, ses conditions de production (fonderie, laminage,...) et le déroulement de sa transformation.

Cette préparation consiste à enlever à la surface de la pièce toute trace d'oxydation naturelle ou de salissures susceptibles de nuire aux interactions entre la surface métallique de la pièce et une composition de précurseurs du revêtement ; ceci permettant un bon accrochage de celle-ci au moment du dépôt de la composition et l'adhésion finale du revêtement selon l'invention après gélification et extraction des solvants.

### Cette préparation comprend par exemple :

a) un dégraissage à l'aide d'un solvant lipophile permettant de dissoudre au moins une partie des graisses présentes à la surface de la pièce ; cette opération peut être effectuée par trempage et/ou aspersion de cette surface ;
b) un dégraissage alcalin permettant de parfaire le dégraissage par dissolution des graisses résiduelles à la surface de la pièce ; cette opération peut être effectuée par trempage et/ou aspersion de la surface de la pièce ;
c) un décapage acide permettant de dissoudre la couche d'oxydation formée à la surface de l'alliage métallique lors de l'étape précédente de décapage alcalin, ou qui permet la dissolution des oxydes naturellement formés à la surface de l'alliage métallique en l'absence de décapage alcalin ; cette opération peut être effectuée par trempage et/ou aspersion ;
d) la pièce est séchée à l'air avant l'étape de dépôt du revêtement hybride.

### Préparation d'une composition liquide de précurseur(s) :

Cette étape consiste à élaborer un sol par hydrolyse et condensation d'un précurseur de type alcoxysilane dans un solvant pouvant être de l'eau, un alcool ou constitué d'un mélange des deux. En particulier, la teneur en solvant alcoolique est de préférence choisie minimale pour diminuer les rejets en composés organiques volatils (COV). Le précurseur majoritaire est avantageusement un alcoxysilane adapté pour former un revêtement sol-gel dit « hybride », c'est-à-dire présentant un groupement organique non modifié au cours de l'hydrolyse condensation du précurseur. En particulier, ce précurseur présente au moins un groupement organique non hydrolysable, c'est-à-dire ne réagissant pas au cours du processus de polymérisation sol-gel par hydrolyse et condensation. On utilise aussi un autre précurseur tel qu'un alcoxyde métallique dont le métal peut avoir comme fonction de catalyser la polymérisation de la fonction organique de l'alcoxysilane fonctionnalisé (porteur dudit groupement organique non hydrolysable) ou de modifier les caractéristiques physiques et/ou chimiques du sol, du revêtement hybride et de ses liaisons avec la surface de la pièce après l'opération de dépôt et le traitement thermique.

### Dépôt de la composition liquide de précurseur(s) :

Plusieurs techniques peuvent être utilisées pour déposer le revêtement hybride selon l'invention. Parmi celles-ci, le trempage-retrait (dipcoating), la pulvérisation (spray-coating) peuvent être par exemple utilisées, le choix dépendant notamment des contraintes géométriques des pièces à recouvrir. Dans le cas de dépôts localisés ou de réparation, ceux-ci peuvent être effectués au tampon ou au pinceau.

Dans la technique de trempage-retrait la vitesse de retrait permet de contrôler l'épaisseur des dépôts pour une viscosité de sol donnée. Une ou plusieurs opérations successives, séparées par un séchage permettant l'évacuation du solvant, sont possibles pour accroître l'épaisseur du revêtement.

Avantageusement, on utilise un dispositif permettant de programmer la vitesse de retrait par exemple entre 50 et 530 mm/min, et qui peut être équipé d'un dispositif de rotation, inclinaison, centrifugation de la pièce... Il est également possible d'imposer un temps de séjour prolongé de la pièce dans la composition liquide, afin par exemple de favoriser les réactions chimiques entre l'alliage immergé et le sol. Les durées d'immersion peuvent par exemple varier entre 1 s et 300 s.

Dans la technique de pulvérisation, l'épaisseur des dépôts est contrôlée, comme dans un dépôt de peinture, par la viscosité du sol, les paramètres de pulvérisation (pression, débit, caractéristiques des buses, vitesse de déplacement) et par le nombre de passages effectués. L'application peut être réalisée manuellement ou automatiquement, suivant des techniques conventionnelles.

Dans les techniques de dépôt au tampon ou au pinceau, l'épaisseur déposée est contrôlée par la viscosité du sol et le nombre de passes.

Afin d'optimiser le procédé en limitant l'évaporation trop rapide des solvants ou en évitant tout risque de pollution extérieure, les étapes de dépôt peuvent être réalisées dans une enceinte avec atmosphère et humidité contrôlés. Dans ce cas, les pièces sont par exemple maintenues 30 secondes après immersion, avant d'être placées dans l'étuve pour le traitement thermique.

Au cours de ce dépôt, le sol déposé encore liquide sur la surface de la pièce est transformé rapidement par hydrolyse-condensation en un xérogel solide contenant encore du solvant. En fonction des conditions de pH par exemple, des réactions d'hydrolyse-condensation peuvent également s'effectuer à partir des groupements hydroxylés présents à la surface du substrat.

En outre, l'étape de dépôt d'un procédé selon l'invention est sensiblement moins contraignante, en termes de coût et de sécurité, qu'une étape de dépôt d'un procédé de l'état de la technique mettant en œuvre une composition liquide à base de polytrétrafluoroéthylène. En effet, une composition à base de polytrétrafluoroéthylène est généralement déposée au pistolet sous un flux d'air important pour permettre d'évacuer les gaz toxiques issus de cette composition, ce qui nécessite des installations particulières et une consommation énergétique supplémentaire.

### Traitement thermique

Le traitement thermique vise à évacuer les solvants encore présents au sein du xérogel après l'étape de dépôt et à favoriser la polymérisation complète de ce dernier en un revêtement lubrifiant solide hybride. Le traitement thermique peut dans certains cas être effectué en plusieurs étapes. Le traitement thermique peut par exemple comprendre un premier palier permettant d'éliminer les solvants aqueux et organiques et un deuxième palier, à plus haute température, qui permet de conférer ses propriétés lubrifiantes audit revêtement.

Après une première étape de traitement thermique à basse température sous air (par exemple à 110°C) le dépôt sol-gel est de type hybride organique-inorganique, ses deux parties étant chimiquement liées. Ce dépôt recouvre la totalité de la surface du substrat et aucune fissure ou défaut n'est observable. En revanche, il ne présente pas de propriété lubrifiante.

Une deuxième étape subséquente avec augmentation de la température de traitement thermique modifie les propriétés du dépôt pour former un revêtement lubrifiant selon l'invention. Après un traitement thermique à 250°C sous air (atmosphère oxydante), les groupements organiques non hydrolysables du (ou des) alcoxyde(s) sont thermiquement décomposés et se recombinent en carbone amorphe et/ou graphite et/ou graphène. On obtient ainsi une pièce présentant en surface un revêtement lubrifiant formé d'une matrice de silice et d'alumine incorporant du carbone amorphe et/ou du graphite et/ou du graphène natifs, et adhérant parfaitement à la surface de la pièce.

La densification du revêtement, accompagnée d'une augmentation du module d'élasticité à laquelle s'ajoute la différence de coefficient de dilation thermique entre la pièce métallique et le revêtement lubrifiant, entrainent la formation d'un réseau de fissures. La propagation des fissures et leur orientation (aléatoire ou orientée) dépend de l'épaisseur du revêtement et de la rugosité de la surface de la pièce sous-jacente (amplitude, morphologie et orientation). La formation d'un tel réseau de fissures non seulement n'est pas nuisible aux propriétés mécaniques du revêtement lubrifiant et de son adhésion à la pièce, mais rend au contraire ce revêtement lubrifiant tolérant à une mise en forme de la pièce métallique sans risque de délamination. Ainsi, dans une variante de réalisation, le revêtement présente des fissures dont la largeur est comprise entre 0,1 µm et 12 µm, notamment entre 0,2 µm et 3 µm.

On réalise chaque étape de traitement thermique à une température inférieure à la température de décomposition par oxydation totale de chaque groupement organique du précurseur en produits gazeux (CO₂, ...).

Dans une première variante de réalisation le traitement thermique est effectué sous air à une température comprise entre 220°C et 450°C, en particulier entre 250°C et 400°C. Si le traitement thermique est effectué sous air à une température supérieure à 450°C, le carbone amorphe est oxydé et est alors libéré sous forme gazeuse, pour ne laisser que la matrice silice-alumine fissurée qui ne présente plus les propriétés lubrifiantes d'un revêtement selon l'invention mais garde ses propriétés de résistance à l'usure (dureté et module élastique élevés).

Pour assurer une transformation contrôlée de la phase organique en carbone amorphe et/ou en graphite et/ou en graphène natifs le traitement thermique peut être effectué selon une autre variante sous atmosphère neutre ou réductrice. Ainsi, l'oxydation d'une partie du carbone des groupements organiques des précurseurs en gaz (CO₂) et la quantité résiduelle de carbone dispersé dans le réseau solide de la matrice silice-alumine, peuvent être contrôlées.

Dans une atmosphère réductrice, les réactions de décomposition thermique et de formation de carbone amorphe se font à plus haute température (>300°C). Une amélioration des propriétés lubrifiantes est obtenue en effectuant le traitement thermique sous atmosphère réductrice (azote) à une température comprise 300°C et 800°C, en particulier entre 350°C et 550°C. Sous atmosphère réductrice le carbone amorphe et/ou le graphite et/ou le graphène natifs dans le réseau solide se forment jusqu'à des températures de 800°C, notamment jusqu'à 550°C sous azote.

Un revêtement lubrifiant ainsi formé est en outre compatible avec des hautes vitesses linéaires de frottement dynamique des pièces en contact, pouvant aller jusqu'à 2000 m/s et avec une utilisation à haute température, pouvant aller jusqu'à 500°C.

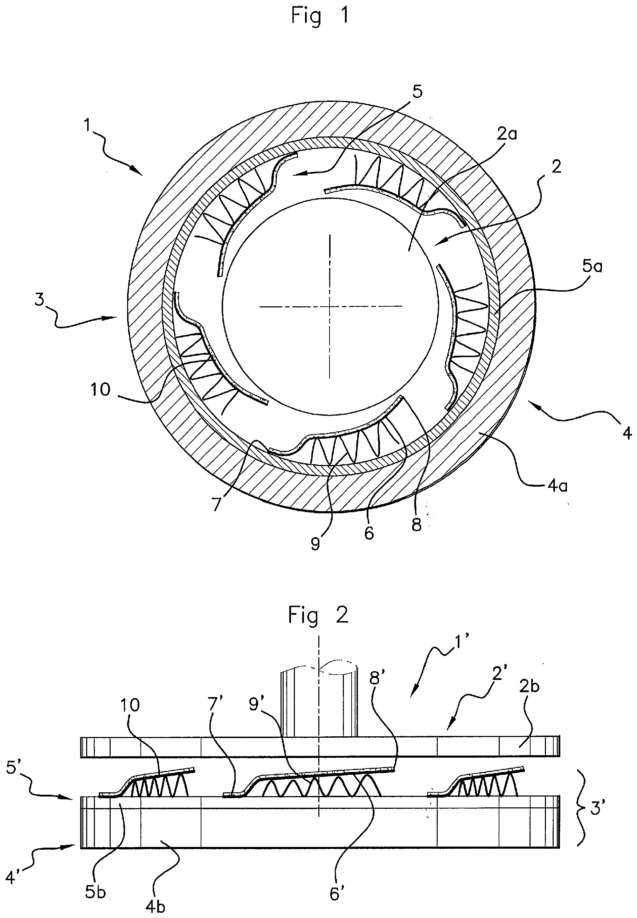

Sur les figures 1 et 2, les échelles ne sont pas respectées, à des fins d'illustration. En particulier, l'épaisseur du revêtement de surface 10 est exagérément agrandie.

Le palier 1 représenté à la figure 1 sous la forme d'un palier à feuilles comporte un rotor 2 sous la forme d'un arbre cylindrique et un stator 3 comprenant un support 4 sous la forme d'un fourreau 4a extérieur et un sustentateur 5 sous la forme d'une bague 5a coaxiale au fourreau 4a et montée à l'intérieur de celui-ci. Le diamètre extérieur de la bague 5a du sustentateur 5 est ajusté au diamètre intérieur du fourreau 4a. Le serrage de l'ajustement et/ou des moyens de fixation (non représentés) maintiennent le fourreau 4a et la bague 5a immobiles l'un par rapport à l'autre dans une position prédéterminée.

Le sustentateur 5 comporte également une pluralité de feuilles 6 élastiques en flexion, de forme globalement rectangulaire, réparties régulièrement à l'intérieur de la bague 5a. Chaque feuille 6 est fixée à la surface intérieure de la bague 5a par un bord, dit bord de fixation 7, s'étendant parallèlement à l'axe de la bague selon une génératrice de cette surface. Le bord de fixation 7 est rendu solidaire de la bague 5a du sustentateur par des moyens connus en eux-mêmes tels que soudage, rivetage, sertissage dans une fente, etc.

Chaque feuille 6 est une pièce selon l'invention, a été traitée par un procédé selon l'invention et présente ainsi un revêtement de surface 10 lubrifiant formé d'un réseau solide au moins partiellement inorganique incorporant, à l'état natif au sein de ce réseau, au moins un composé solide carboné lubrifiant choisi dans le groupe formé du graphène, du graphite, du carbone amorphe et de leurs mélanges.

Le bord opposé, dit bord libre 8, de la feuille 6 s'étend vers l'arrière, dans le sens de rotation et, radialement, en direction du rotor 2 afin de réaliser un « coin d'air » permettant d'assurer la sustentation de celui-ci sur un film de gaz. De préférence, le bord libre 8 de chaque feuille 6 s'étend au moins sensiblement jusqu'au-dessus (en regard radialement) du bord de fixation 7 de la feuille suivante de manière à ce que la somme des secteurs angulaires couverts par les feuilles 6 soit approximativement égale à 360 degrés pour couvrir le mieux possible la circonférence interne du palier.

Pour permettre un support et un centrage approximatif de l'arbre lorsqu'il n'est pas en rotation et pour limiter la déflexion des feuilles 6, par exemple lors de variations de la charge radiale en fonctionnement, chaque feuille 6 est avantageusement soutenue par un raidisseur 9 formé d'une bande ondulée, préférentiellement métallique, et dont l'axe des ondulations est sensiblement parallèle au bord de fixation 7 de la feuille 6. Le raidisseur 9 est fixé au-dessous de la feuille 6, sur la face interne de la bague 5a, au moins par le bord avant, du côté du bord de fixation 7, de sa première ondulation afin de permettre une déformation élastique du raidisseur 9.

Au repos, lorsque le rotor 2 est immobile, les feuilles 6 sont au moins pour partie au contact du rotor. Pour les faibles vitesses de rotation du rotor (phases de démarrage et d'arrêt), les revêtements 10 lubrifiants des feuilles 6 frottent (frottement sec) sur le rotor 2.

En fonctionnement, l'arbre 2a est en rotation par rapport au stator 3 et donc aux feuilles 6. Le film d'air entrainé par la rotation de l'arbre est comprimé dans l'espace entre la feuille et l'arbre (appelé convergent) et forme un champ de pression permettant la sustentation de l'arbre à une distance de quelques microns des feuilles 6.

Dans une variante de réalisation selon l'invention, l'arbre 2a présente par exemple un diamètre compris entre 25 mm et 50 mm et chaque feuille 6 présente deux faces principales dont les côtés sont compris entre 25 mm et 50 mm, l'épaisseur de chaque feuille étant de l'ordre de 0,1 mm.

La figure 2 représente une butée axiale de palier. Cette butée 1' comporte également un rotor 2' comprenant une plaque 2b cylindrique solidaire d'un arbre tournant. La butée 1' comporte également un stator 3' comprenant un support 4' sous la forme d'un disque support 4b et d'un sustentateur 5' comprenant un disque 5b. La plaque cylindrique 2b, le disque support 4b et le disque sustentateur 5b sont coaxiaux et ont pour axe commun l'axe de rotation de la butée. Le disque sustentateur 5b est fixé sur le disque support 4b dans une position angulaire prédéterminée par l'intermédiaire de vis (non représentées) au travers des trous de fixation ménagés respectivement dans le disque sustentateur et le disque support.

Le disque sustentateur 5b comprend également, sur sa face en regard de la plaque 2b du rotor, une pluralité de feuilles 6' élastiques, de forme sensiblement trapézoïdale, régulièrement réparties sur le disque sustentateur de manière à couvrir chacune un secteur angulaire centré sur l'axe de rotation de la butée. Les feuilles 6' sont fixées sur le disque 5b par un bord de fixation 7' selon une direction radiale, orthogonale au sens de rotation de la butée et s'étendent vers l'arrière, dans le sens de rotation jusqu'à un bord libre 8' sensiblement parallèle à la direction radiale.

Chaque feuille 6' est une pièce selon l'invention, a été traitée par un procédé selon l'invention et présente ainsi un revêtement de surface 10' lubrifiant formé d'un réseau solide au moins partiellement inorganique incorporant à l'état natif au sein de ce réseau, au moins un composé solide carboné lubrifiant choisi dans le groupe formé du graphène, du graphite, du carbone amorphe et de leurs mélanges.

Dans la direction axiale, les feuilles 6' comportent une rampe abrupte s'étendant du bord de fixation 7' en direction du rotor 2' suivie d'une partie en pente douce montant vers le rotor, voire même sensiblement parallèle à celui-ci. Chaque feuille 6' définit ainsi entre son bord de fixation 7' et son bord libre 8' un convergent dans lequel le film d'air existant entre la feuille 6' et la plaque 2b' du rotor est comprimé.

Les feuilles 6' sont individuellement en appui par leur face en regard du disque sustentateur 5b' sur un raidisseur 9' formé de manière analogue au raidisseur de la figure 1 par une bande ondulée, préférentiellement métallique, de largeur correspondant à celle de la feuille 6'. L'axe des ondulations du raidisseur 9' est sensiblement parallèle au bord de fixation 7' de la feuille 6'. Le raidisseur 9' est lui aussi fixé sur le disque sustentateur 5b, au-dessous de la feuille 6' élastique, au moins par le bord avant de sa première ondulation de manière à permettre une déformation élastique du raidisseur dans la direction axiale.

Au repos, lorsque le rotor 2' est immobile, la plaque cylindrique 2b est en appui sur les feuilles 6', elles-mêmes maintenues par les raidisseurs 9'. Pour les faibles vitesses de rotation du rotor (phases de démarrage et d'arrêt), la plaque 2b frotte (frottement dynamique sec) sur les revêtements lubrifiants 10' des feuilles 6'.

En fonctionnement, la plaque cylindrique 2b est en rotation par rapport au stator 3' et donc aux feuilles 6'. Le film d'air entrainé par la rotation de la plaque 2b est comprimé dans chaque convergent entre chaque feuille 6' et la plaque 2b et forme un champ de pression permettant de maintenir la plaque 2b à une distance de quelques microns des feuilles 6'.

On a pu constater que la présence dudit revêtement lubrifiant selon l'invention permet de diminuer les forces de frottements et donc d'augmenter la capacité de charge axiale de la butée 1'.

### EXEMPLE :

On fabrique plusieurs feuilles de palier à feuilles formées en un superalliage à base de nickel et de chrome (du type Inconel 750®). On dégraisse la surface chaque feuille avec de l'acétone pure à une température inférieure à 42°C pendant 5 secondes à 3 minutes. On réalise ensuite un dégraissage alcalin à l'aide d'une solution alcaline comprenant 40 à 60 g/l de Borax et 40 à 60 g/l de tripolyphosphate de sodium à 50°C-70°C pendant 10 min à 30 min. Puis, on sèche chaque feuille à l'air.

On prépare, sous agitation, une composition de précurseurs (sol) comprenant 1,79 mol/L de glycidoxypropyltriméthoxysilane (GPTMS) et 0,77 mol/L de tri(s-butoxyde) d'aluminium, le rapport molaire entre le GPTMS et le tri(s-butoxyde) d'aluminium dans la composition étant de 70/30. La composition de précurseurs comprend en outre 21 mol/L d'eau et 0,45 mol/L de propan-1-ol.

La composition ainsi préparée est conservée (maturation du sol) pendant 24 heures à 25°C.

On trempe ensuite les feuilles préalablement préparées dans ce sol et on les retire avec une vitesse de retrait de 75 mm/min.

On place ensuite les feuilles ainsi revêtues du sol dans une étuve à 50°C pendant 24 heures puis, on réalise un traitement thermique des feuilles à 110°C (feuille 1), 200°C (feuille 2), 250°C (feuille 2'), 300°C (feuille 3), 400°C (feuille 4) ou 500°C (feuille 5) pendant 16 heures dans l'air.

On met en forme ces feuilles ainsi revêtues en les cintrant selon une courbure de 30 m⁻¹ à 80 m⁻¹.

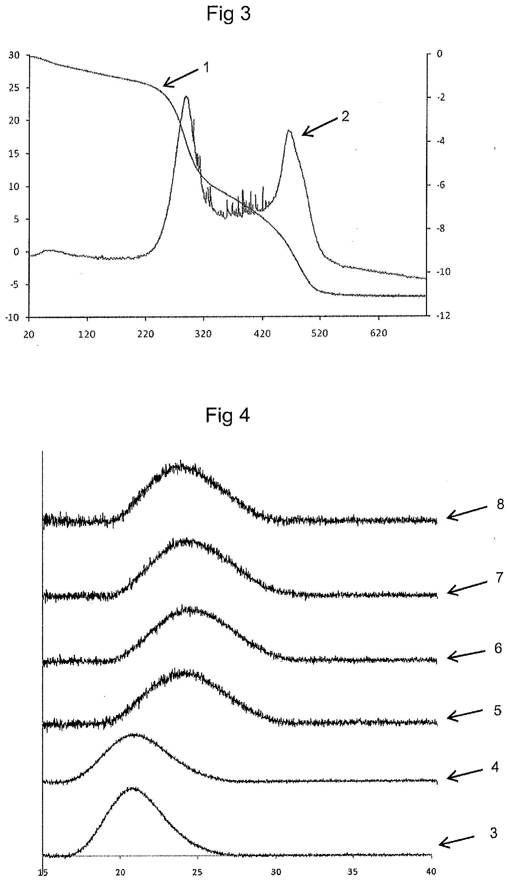

Sur la figure 3 la courbe 1 représente la courbe d'analyse thermo-gravimétrique (ATG) et la courbe 2 représente la courbe d'analyse thermique différentielle (ATD) du revêtement déposé sur une feuille de palier ainsi préparée, avant le traitement thermique. En abscisses figure la température. La perte de masse mesurée par l'ATG figure en ordonnées à droite des courbes. Ces analyses mettent en évidence une décomposition exothermique accompagnée d'une perte de masse de 5 % entre 220°C et 350°C. Cette perte de masse correspondrait à un dégagement gazeux de sous-produits de la réaction de décomposition du groupement glycidoxypropyle au moins en partie en particules de carbone amorphe et de graphène. Ces sous-produits gazeux étant notamment de l'eau, du dioxyde de carbone, du méthane ou encore de l'éthylène.

La figure 4 représente un diagramme de diffraction des rayons X du revêtement déposé sur les feuilles de palier ainsi préparées pour différentes températures de traitement thermique. La courbe 3 correspond à la feuille 1 (traitement thermique à 110°C), la courbe 4 correspond à la feuille 2 (traitement thermique à 200°C), la courbe 5 correspond à la feuille 2' (traitement thermique à 250°C), la courbe 6 correspond à la feuille 3 (traitement thermique à 300°C), la courbe 7 correspond à la feuille 4 (traitement thermique à 400°C), la courbe 8 correspond à la feuille 5 (traitement thermique à 500°C). On observe ainsi qu'un changement de phase (correspondant probablement à la transformation du groupement glycidoxypropyle au moins en partie en particules de carbone amorphe et de graphène) a lieu entre 200°C et 250°C.

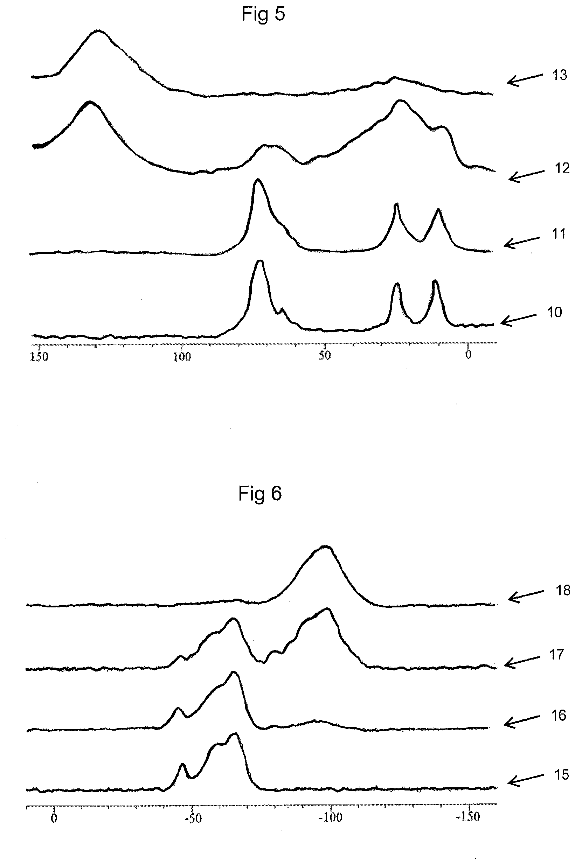

La figure 5 représente les spectres en Résonance Magnétique Nucléaire (RMN) du carbone du revêtement déposé sur une feuille de palier ainsi préparée pour différentes températures de traitement thermique. La courbe 10 correspond à la feuille 1 (traitement thermique à 110°C), la courbe 11 correspond à la feuille 2 (traitement thermique à 200°C), la courbe 12 correspond à la feuille 2' (traitement thermique à 250°C) et la courbe 13 correspond à la feuille 3 (traitement thermique à 300°C). sur les courbes 10 et 12, les pics situés entre 10 ppm et 35ppm ainsi que les pics situés entre 60 ppm et 75 ppm sont caractéristiques du groupement glycidoxypropyle. Sur les courbes 12 et 13 apparait un pic caractéristique du graphène (déplacements chimiques compris entre -120 ppm et -150 ppm, caractéristiques des liaisons C-C de type sp2). Ces spectres mettent donc en évidence la formation au sein du revêtement, à partir de 250°C, de carbone amorphe et de graphène.

La figure 6 représente des spectres en RMN du silicium du revêtement déposé sur une feuille de palier ainsi préparée pour différentes températures de traitement thermique. La courbe 15 correspond à la feuille 1 (traitement thermique à 110°C), la courbe 16 correspond à la feuille 2 (traitement thermique à 200°C), la courbe 17 correspond à la feuille 2' (traitement thermique à 250°C) et la courbe 18 correspond à la feuille 3 (traitement thermique à 300°C). Ces spectres mettent en évidence la formation au sein du revêtement, à partir de 250°C, de silice (déplacements chimiques compris entre -80 ppm et -110 ppm) simultanément à l'apparition de carbone amorphe et de graphène.

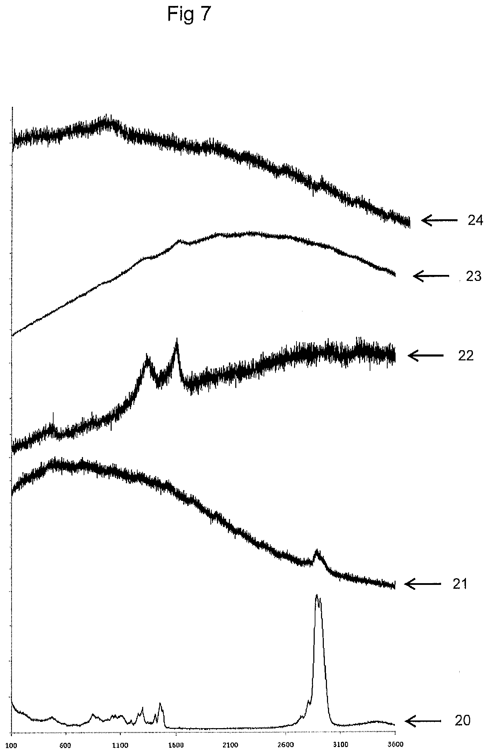

La figure 7 représente les spectres Infrarouge en Raman du revêtement déposé sur une feuille de palier ainsi préparée pour différentes températures de traitement thermique. La courbe 20 correspond à la feuille 1 (traitement thermique à 110°C), la courbe 21 correspond à la feuille 2 (traitement thermique à 200°C), la courbe 22 correspond à la feuille 2' (traitement thermique à 250°C), la courbe 23 correspond à la feuille 3 (traitement thermique à 300°C) et la courbe 24 correspond à la feuille 4 (traitement thermique à 400°C). Ces spectres mettent donc en évidence la formation de carbone amorphe et de graphène au sein du revêtement à partir de 250°C.

Des tests tribologiques ont également été réalisés sur la feuille 1 (traitement thermique à 110°C), la feuille 2' (traitement thermique à 250°C) et la feuille 5 (traitement thermique à 500°C). Chaque test tribologique consiste à soumettre la surface revêtue de chaque feuille au frottement d'une bille en alumine présentant un diamètre de 6 mm. Pour chaque cycle, la bille réalise un trajet rectiligne de 12 mm aller et retour (soit 6 mm à l'aller et 6 mm au retour) à une vitesse de 3,77 cm/s en appliquant une force de 1 N sur la feuille. On observe que le coefficient de frottement est de l'ordre de 0,4 pour la feuille 2' et reste constant jusqu'à 1000 cycles. A titre comparatif, on observe que le coefficient de frottement est de l'ordre de 0,6 pour la feuille 1 jusqu'à 420 cycles environ et augmente pour atteindre une valeur de l'ordre de 0,85 entre 500 et 1000 cycles. Pour la feuille 5, que le coefficient de frottement augmente légèrement entre 0,5 et 0,6 au cours de 200 premiers cycles et reste de l'ordre de 0,6 jusqu'à 1000 cycles. Le coefficient de frottement d'une feuille ne présentant aucun revêtement lubrifiant est compris entre 0,7 et 0,9 dans les mêmes conditions de test. Un procédé de fabrication d'une pièce telle que la feuille 2' selon l'invention permet donc d'améliorer de façon importante la résistance aux frottements de ladite pièce, la feuille 2' présentant de meilleures propriétés lubrifiantes que la feuille 1.

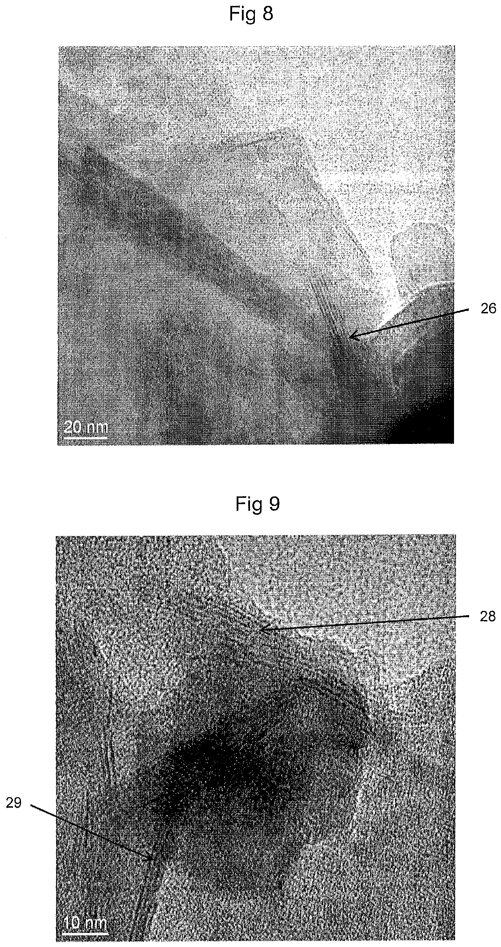

La feuille 2' a également été caractérisée par microscopie électronique en transmission (MET) à haute résolution. Les figures 8 et 9 représentent des images obtenues par observation de la feuille 2' par microscopie électronique en transmission (MET). On observe, sur chacune des figures 8 et 9, dans la matrice du revêtement formée de silice et d'alumine la présence de feuillets de graphène 26, 28 et 29 (visibles sur leur tranche sous la forme de lignes noires sensiblement parallèles les unes par rapport aux autres). Les inventeurs ont observé que les particules de graphène sont dispersées de façon homogène dans tout le revêtement et ne sont pas agglomérées entre elles. Chaque particule de graphène est formée d'un empilement de 4 à 8 feuillets de graphène. La plus grande dimension des particules de graphène est l'ordre de 10 à 50 nm.

Par microanalyse élémentaire par analyse du carbone organique total à l'aide d'un appareil TOC 5050A ® commercialisé par la société SHIMADZU (Marne La Vallée, France), on a également déterminé que le revêtement de la feuille 2' comprend 20 % en poids de carbone solide lubrifiant (graphène et carbone amorphe) par rapport au poids total du revêtement.

Le revêtement ainsi formé présente une épaisseur de l'ordre de 1 µm (épaisseur mesurée par profilométrie interférométrique).

L'invention peut faire l'objet de très nombreuses variantes de réalisation. En particulier, une pièce selon l'invention peut être toute pièce d'une machine tournante, notamment de turbomachine à grandes vitesse de rotation (par exemple de systèmes de conditionnement d'air, de piles à combustible pour les aéronefs, les véhicules terrestres ou aquatiques).

## Revendications

1. Procédé de fabrication d'une pièce dotée d'un revêtement (10, 10') de surface lubrifiant, dans lequel :
- on prépare une composition comprenant au moins un précurseur dudit revêtement présentant au moins un groupement organique,
- on dépose ladite composition sur au moins une partie d'une surface de ladite pièce, ladite partie de surface de la pièce étant formée d'au moins un matériau métallique,
- après avoir déposé ladite composition en surface de ladite pièce, on réalise au moins un traitement thermique à une température supérieure à 220°C de façon à former un revêtement de surface lubrifiant,
**caractérisé en ce que** ladite composition comprend au moins un précurseur dudit revêtement choisi dans le groupe formé des alcoxydes de formule générale (I) suivante :
X(O-R₁)_{n'-a} (R₂)ₐ (I)
dans laquelle :
▪ X est choisi parmi le silicium (Si) et les éléments métalliques,
▪ R₁ est choisi parmi les groupements hydrocarbonés,
▪ n' est un nombre entier naturel représentant la valence de l'élément X,
▪ a est un nombre entier naturel de l'intervalle [1 ; n' [,
▪ R₂ est choisi parmi les groupements organiques liés à X par un atome de carbone,
de façon à former, à l'issue dudit traitement thermique, un revêtement (10, 10') de surface lubrifiant formé d'un réseau solide au moins partiellement inorganique incorporant du carbone solide sous au moins une forme allotropique lubrifiante à l'état dispersé et piégé au sein dudit réseau solide, et **caractérisé en ce que** :
- le traitement thermique est réalisé de façon à former au sein dudit réseau solide au moins du graphène,
- ladite composition comprend au moins un précurseur choisi dans le groupe formé des alcoxydes métalliques de formule générale (III) suivante :
M(O-R₃)ₘ (III)
dans laquelle :
▪ M est un élément métallique choisi parmi l'aluminium, le titane, le zirconium et le vanadium,
▪ R₃ est un groupement hydrocarboné de formule [CₙH₂ₙ₊₁], n étant un nombre entier supérieur ou égal à 1,
▪ m est un nombre entier naturel représentant la valence de l'élément métallique M.

2. Procédé selon la revendication 1, **caractérisé en ce qu'**au moins un groupement organique d'au moins un précurseur dudit revêtement (10, 10') est choisi parmi les groupements hydrocarbonés et **en ce que** le traitement thermique est réalisé de façon à former au sein dudit réseau solide au moins un composé solide lubrifiant du carbone choisi dans le groupe formé du graphène, du graphite, du carbone amorphe et de leurs mélanges.

3. Procédé selon l'une des revendications 1 ou 2, **caractérisé en ce que** ladite composition comprend au moins un précurseur choisi dans le groupe formé des alcoxysilanes de formule générale (II) suivante :
Si(O-R₁)₄₋ₐ (R₂)ₐ (II)
dans laquelle :
▪ R₁ est choisi parmi les groupements hydrocarbonés,
▪ a est un nombre entier naturel de l'intervalle [1 ; 3],
▪ R₂ est choisi parmi les groupements organiques liés au silicium par un atome de carbone.

4. Procédé selon l'une des revendications 1 à 3, **caractérisé en ce qu'**on réalise ledit traitement thermique dans une atmosphère oxydante à une température comprise entre 220°C et 450°C.

5. Procédé selon l'une des revendications 1 à 3, **caractérisé en ce qu'**on réalise ledit traitement thermique dans une atmosphère non oxydante, à une température comprise entre 300°C et 800°C.

6. Procédé selon l'une des revendications 1 à 5, **caractérisé en ce qu'**on dépose ladite composition sur au moins une partie d'une surface de ladite pièce par une technique de dépôt choisie parmi le trempage-retrait, la pulvérisation, la centrifugation et la sérigraphie.

7. Procédé selon l'une des revendications 1 à 6, **caractérisé en ce qu'**après ledit traitement thermique, on déforme la pièce en flexion.

8. Pièce dotée d'un revêtement de surface lubrifiant **caractérisée en ce que** ledit revêtement (10, 10') est formé d'un réseau solide au moins partiellement inorganique incorporant du carbone solide sous au moins une forme allotropique lubrifiante à l'état dispersé et piégé au sein dudit réseau solide, ledit carbone solide étant du graphène,
ledit revêtement étant formé par traitement thermique à une température supérieure à 220°C, après dépôt d'une composition comprenant au moins un précurseur dudit revêtement présentant au moins un groupement organique sur au moins une partie d'une surface de ladite pièce, ladite partie de surface de la pièce étant formée d'au moins un matériau métallique,
et ladite composition comprenant :
- au moins un précurseur choisi dans le groupe formé des alcoxydes de formule générale (I) suivante :
X(O-R₁)_{n'-a} (R₂)ₐ (I)
dans laquelle :
▪ X est choisi parmi le silicium (Si) et les éléments métalliques,
▪ R₁ est choisi parmi les groupements hydrocarbonés,
▪ n' est un nombre entier naturel représentant la valence de l'élément X,
▪ a est un nombre entier naturel de l'intervalle [1 ; n' [,
R₂ est choisi parmi les groupements organiques liés à X par un atome de carbone,
- au moins un précurseur choisi dans le groupe formé des alcoxydes métalliques de formule générale (III) suivante :
M(O-R₃)ₘ (III)
dans laquelle :
▪ M est un élément métallique choisi parmi l'aluminium, le titane, le zirconium et le vanadium,
▪ R₃ est un groupement hydrocarboné de formule [CₙH₂ₙ₊₁], n étant un nombre entier supérieur ou égal à 1,
▪ m est un nombre entier naturel représentant la valence de l'élément métallique M.

9. Pièce selon la revendication 8, **caractérisée en ce qu'**il s'agit d'une pièce choisie parmi une feuille de palier (1) à feuilles de turbomachine et une feuille de butée (1') axiale de palier de turbomachine.

10. Pièce selon l'une des revendications 8 ou 9, **caractérisée en ce que** ledit revêtement (10, 10') présente une épaisseur comprise entre 0,2 µm et 5 µm.

11. Pièce selon l'une des revendications 8 à 10, **caractérisée en ce que** ledit réseau solide au moins partiellement inorganique est choisi dans le groupe formé des réseaux d'oxydes métalliques, des réseaux d'oxydes de silicium et de leurs mélanges.

12. Pièce selon l'une des revendications 8 à 11, **caractérisée en ce qu'**elle est formée d'au moins un matériau métallique.

13. Turbomachine, notamment un compresseur, une turbine ou un turbocompresseur, comprenant au moins une pièce selon l'une des revendications 8 à 12.

14. Système de conditionnement d'air de cabine d'aéronef comprenant au moins une turbomachine selon la revendication 13.

15. Système de pile à combustible comprenant au moins une turbomachine selon la revendication 13.

## Patentansprüche

1. Verfahren zur Herstellung eines Teils, welches mit einer Schmierfett-Oberflächenbeschichtung (10, 10') versehen ist, bei dem:
- eine Zusammensetzung zubereitet wird, die mindestens einen Vorläufer der Beschichtung umfasst, der mindestens eine organische Gruppe aufweist,
- die Zusammensetzung auf mindestens einem Anteil einer Oberfläche des Teils abgeschieden wird, wobei der Oberflächenanteil des Teils aus mindestens einem metallischen Material gebildet wird,
- nachdem die Zusammensetzung auf der Oberfläche des Teils abgeschieden worden ist, mindestens eine Wärmebehandlung bei einer Temperatur von mehr als 220 °C durchgeführt wird, um eine Schmierfett-Oberflächenbeschichtung zu bilden,
**dadurch gekennzeichnet, dass** die Zusammensetzung mindestens einen Vorläufer der Beschichtung umfasst, der aus der Gruppe ausgewählt wird, die aus Alcoxyden der folgenden allgemeinen Formel (I) gebildet wird:
X(O-R₁)_{n'-a} (R₂)ₐ (I)
in der:
• X ausgewählt wird aus Silicium (Si) und metallischen Elementen,
• R₁ ausgewählt wird aus Kohlenwasserstoffgruppen,
• n' eine natürliche ganze Zahl ist, welche die Wertigkeit des Elements X darstellt,
• a eine natürliche ganze Zahl des Intervalls [1; n'[ ist,
• R₂ aus organischen Gruppen ausgewählt wird, die durch ein Kohlenstoffatom an X gebunden sind,
in der Art, um am Ende der Wärmebehandlung eine Schmierfett-Oberflächenbeschichtung (10, 10') zu bilden, die aus einem starken, mindestens teilweise anorganischen Netzwerk, das festen Kohlenstoff einschließt, in mindestens einer schmierenden allotropischen Form, im dispergierten, und innerhalb des starken Netzwerks gefangenen Zustand gebildet wird,
und **dadurch gekennzeichnet, dass**:
- die Wärmebehandlung in der Art durchgeführt wird, um innerhalb des starken Netzwerks mindestens Graphen zu bilden,
- die Zusammensetzung mindestens einen Vorläufer umfasst, der aus der Gruppe ausgewählt wird, die aus metallischen Alcoxyden der folgenden allgemeinen Formel (III) gebildet wird:
**M(O-R₃)ₘ** **(III)**
in der:
• M ein metallisches Element ist, das aus Aluminium, Titan, Zirkonium und Vanadium ausgewählt ist,
• R₃ eine Kohlenwasserstoffgruppe der Formel [CₙH₂ₙ₊₁] ist, wobei n eine ganze Zahl größer oder gleich 1 ist,
• m eine natürliche ganze Zahl ist, welche die Wertigkeit des metallischen Elements M darstellt.

2. Verfahren nach Anspruch 1, **dadurch gekennzeichnet, dass** mindestens eine organische Gruppe mindestens eines Vorläufers der Beschichtung (10, 10') aus den Kohlenstoffgruppen ausgewählt ist, und dadurch, dass die Wärmebehandlung in der Art durchgeführt wird, um innerhalb des starken Netzwerks mindestens eine starke Schmierfett-Verbindung des Kohlenstoffs zu bilden, die aus der Gruppe ausgewählt wird, die aus Graphen, Grafit, amorphem Kohlenstoff und deren Gemischen gebildet wird.

3. Verfahren nach einem der Ansprüche 1 oder 2, **dadurch gekennzeichnet, dass** die Zusammensetzung mindestens einen Vorläufer umfasst, der aus der Gruppe ausgewählt wird, die aus Alcoxysilanen der folgenden allgemeinen Formel (II) besteht:
**Si(O-R₁)₄₋ₐ (R₂)ₐ** **(II)**
in der:
• R₁ ausgewählt wird aus Kohlenwasserstoffgruppen,
• a eine natürliche ganze Zahl des Intervalls [1; 3] ist,
• R₂ aus organischen Gruppen ausgewählt wird, die durch ein Kohlenstoffatom an das Silicium gebunden ist.

4. Verfahren nach einem der Ansprüche 1 bis 3, **dadurch gekennzeichnet, dass** die Wärmebehandlung in einer oxidierenden Atmosphäre bei einer Temperatur durchgeführt wird, die zwischen 220 °C und 450 °C enthalten ist.

5. Verfahren nach einem der Ansprüche 1 bis 3, **dadurch gekennzeichnet, dass** die Wärmebehandlung in einer nicht oxidierenden Atmosphäre bei einer Temperatur durchgeführt wird, die zwischen 300 °C und 800 °C enthalten ist.

6. Verfahren nach einem der Ansprüche 1 bis 5, **dadurch gekennzeichnet, dass** die Zusammensetzung auf mindestens einem Anteil einer Oberfläche des Teils durch eine Abscheidetechnik abgeschieden wird, die aus dem Tauchziehen, der Zerstäubung, dem Schleudern und dem Siebdruck ausgewählt wird.

7. Verfahren nach einem der Ansprüche 1 bis 6, **dadurch gekennzeichnet, dass** das Teil im Anschluss an die Wärmebehandlung verbogen wird.

8. Teil, welches mit einer Schmierfett-Oberflächenbeschichtung versehen ist, **dadurch gekennzeichnet, dass** die Beschichtung (10, 10') aus einem starken, mindestens teilweise anorganischen Netzwerk gebildet ist, das starken Kohlenstoff in mindestens einer schmierenden allotropischen Form, im dispergierten, und innerhalb des starken Netzwerks gefangenen Zustand einschließt, wobei der starke Kohlenstoff Graphen ist,
wobei die Beschichtung durch Wärmebehandlung bei einer Temperatur von mehr als 220 °C nach Abscheiden einer Zusammensetzung, die mindestens einen Vorläufer der Beschichtung umfasst, der mindestens eine organische Gruppe aufweist, auf mindestens einem Anteil einer Oberfläche des Teils gebildet wird, wobei der Oberflächenanteil des Teils aus mindestens einem metallischen Material gebildet wird,
und die Zusammensetzung umfasst:
- mindestens einen Vorläufer, ausgewählt aus der Gruppe, die aus Alcoxyden der folgenden allgemeinen Formel (I) gebildet wird:
**X(O-R₁)_{n'-a} (R₂)ₐ** **(I)**
in der:
• X ausgewählt wird aus Silicium (Si) und metallischen Elementen,
• R₁ ausgewählt wird aus Kohlenwasserstoffgruppen,
• n' eine natürliche ganze Zahl ist, welche die Wertigkeit des Elements X darstellt,
• a eine natürliche ganze Zahl des Intervalls [1; n'[ ist,
R₂ aus organischen Gruppen ausgewählt wird, die durch ein Kohlenstoffatom an X gebunden sind,
- mindestens einen Vorläufer, der aus der Gruppe ausgewählt wird, die aus metallischen Alcoxyden der folgenden allgemeinen Formel (III) gebildet wird:
**M(O-R₃)ₘ** **(III)**
in der:
• M ein metallisches Element ist, das aus Aluminium, Titan, Zirkonium und Vanadium ausgewählt ist,
• R₃ eine Kohlenwasserstoffgruppe der Formel [CₙH₂ₙ₊₁] ist, wobei n eine ganze Zahl größer oder gleich 1 ist,
• m eine natürliche ganze Zahl ist, welche die Wertigkeit des metallischen Elements M darstellt.

9. Teil nach Anspruch 8, **dadurch gekennzeichnet, dass** es sich um ein Teil handelt, das aus einer Lagerfolie (1) mit Folien einer Turbomaschine und einer axialen Lager-Anschlagfolie (1') einer Turbomaschine ausgewählt wird.

10. Teil nach einem der Ansprüche 8 oder 9, **dadurch gekennzeichnet, dass** die Beschichtung (10, 10') eine Dicke aufweist, die zwischen 0,2 µm und 5 µm enthalten ist.

11. Teil nach einem der Ansprüche 8 bis 10, **dadurch gekennzeichnet, dass** das starke, mindestens teilweise anorganische Netzwerk aus der Gruppe ausgewählt wird, die aus Metalloxid-Netzwerken Siliciumoxid-Netzwerken und deren Gemischen gebildet wird.

12. Teil nach einem der Ansprüche 8 bis 11, **dadurch gekennzeichnet, dass** es aus mindestens einem metallischen Material gebildet wird.

13. Turbomaschine, insbesondere ein Kompressor, eine Turbine oder ein Turbokompressor, mindestens ein Teil nach einem der Ansprüche 8 bis 12 umfassend.

14. Klimaanlagensystem einer Flugzeugkabine, mindestens eine Turbomaschine nach Anspruch 13 umfassend.

15. Brennstoffzellensystem, mindestens eine Turbomaschine nach Anspruch 13 umfassend.

## Claims

1. Process for manufacturing a part provided with a lubricating surface coating (10,10'), wherein:
- a composition comprising at least one precursor of said lubricating surface coating having at least one organic group is prepared,
- said composition is deposited on at least a portion of a surface of said part, said portion of a surface of the part being formed of at least one metallic material,
- after said composition has been deposited on the surface of said part, at least one heat treatment is carried out at a temperature greater than 220°C so as to form a lubricating surface coating,
**characterized in that** said composition comprises at least one precursor of said lubricating surface coating chosen from the group formed of the alkoxides of the following general formula (I):
X(O-R₁)_{n'-a} (R₂)ₐ (I)
wherein:
▪ X is chosen from silicon (Si) and the metallic elements,
▪ R₁ is chosen from the hydrocarbyl groups,
▪ n' is a natural integer representing the valence of the element X,
▪ a is a natural integer of the interval [1 ; n' [,
▪ R₂ is chosen from the organic groups bonded to X by a carbon atom,
so as to form, at the end of said heat treatment, a lubricating surface coating formed of an at least partially inorganic solid network incorporating solid carbon in at least one lubricating allotropic form in a dispersed state and trapped within said solid network,
and **characterized in that**:
- the heat treatment is carried out so as to form at least some graphene within said solid network,
- said composition comprises at least one precursor chosen from the group formed of the metal alkoxides of the following general formula (III) :
M(O-R₃)ₘ (III)
wherein:
▪ M is a metallic element chosen from aluminium, titanium, zirconium and vanadium,
▪ R₃ is a hydrocarbyl group of the formula [CₙH₂ₙ₊₁], n being an integer greater than or equal to 1,
▪ m is a natural integer representing the valence of the metallic element M.

2. Process according to claim 1, **characterized in that** at least one organic group of at least one precursor of said lubricating surface coating is chosen from the hydrocarbyl groups, and wherein the heat treatment is carried out so as to form within said solid network at least one solid lubricating compound of carbon chosen from the group formed of graphene, graphite, amorphous carbon and mixtures thereof.

3. Process according to one of claims 1 or 2, **characterized in that** said composition comprises at least one precursor chosen from the group formed of the alkoxysilanes of the following general formula (II):
Si(O-R₁)₄₋ₐ (R₂)ₐ (II)
wherein:
▪ R₁ is chosen from the hydrocarbyl groups,
▪ a is a natural integer of the interval [1 ; 3],
▪ R₂ is chosen from the organic groups bonded to silicon by a carbon atom.

4. Process according to one of claims 1 to 3, **characterized in that** said heat treatment is carried out in an oxidizing atmosphere at a temperature of from 220°C to 450°C.

5. Process according to one of claims 1 to 3, **characterized in that** said heat treatment is carried out in a non-oxidizing atmosphere at a temperature of from 300°C to 800°C.

6. Process according to one of claims 1 to 5, **characterized in that** said composition is deposited on at least a portion of a surface of said part by a deposition technique chosen from dip coating, spray coating, centrifugation and screen printing.

7. Process according to one of claims 1 to 6, **characterized in that**, after said heat treatment, the part is deformed by bending.

8. Part provided with a lubricating surface coating, wherein said lubricating surface coating (10,10') is formed of an at least partially inorganic solid network incorporating solid carbon in at least one lubricating allotropic form in a dispersed state and trapped within said solid network, said solid carbon being graphene,
said coating being formed by at least one heat treatment carried out at a temperature greater than 220°C, after deposition of a composition comprising at least one precursor of said coating having at least one organic group on at least a portion of a surface of said part, said portion of a surface of the part being formed of at least one metallic material,
and aid composition comprising :
- at least one precursor chosen from the group formed of the alkoxides of the following general formula (I):
X(O-R₁)_{n'-a} (R₂)ₐ (I)
wherein:
▪ X is chosen from silicon (Si) and the metallic elements,
▪ R₁ is chosen from the hydrocarbyl groups,
▪ n' is a natural integer representing the valence of the element X,
▪ a is a natural integer of the interval [1 ; n' [,
R₂ is chosen from the organic groups bonded to X by a carbon atom,
- at least one precursor chosen from the group formed of the metal alkoxides of the following general formula (III) :
M(O-R₃)ₘ (III)
wherein:
▪ M is a metallic element chosen from aluminium, titanium, zirconium and vanadium,
▪ R₃ is a hydrocarbyl group of the formula [CₙH₂ₙ₊₁], n being an integer greater than or equal to 1,
▪ m is a natural integer representing the valence of the metallic element M.

9. Part according to claim 8, **characterized in that** said part is chosen from a turbomachine foil (1) bearing foil and a turbomachine axial thrust (1') bearing foil.

10. Part according to one of claims 8 or 9, **characterized in that** said coating (10,10') have a thickness of from 0.2 µm to 5 µm.

11. Part according to one of claims 8 to 10, **characterized in that** said at least partially inorganic solid network is chosen from the group formed of metallic oxide networks, silicon oxide networks and mixtures thereof.

12. Part according to one of claims 8 to 11, **characterized in that** it is formed of at least one metallic material.

13. A turbomachine, especially a compressor, a turbine or a turbocompressor, comprising at least one part according to one of claims 8 to 12.

14. An aircraft cabin air conditioning system comprising at least one turbomachine according to claim 13.

15. A fuel cell system comprising at least one turbomachine according to claim 13.
